# EUROPÄISCHE PATENTSCHRIFT

(11) **EP 2 218 957 B1**
(45) Veröffentlichungstag und Bekanntmachung des Hinweises auf die Patenterteilung: **04.01.2012**
(21) Anmeldenummer: 10153402.2
(22) Anmeldetag: 12.02.2010
(51) Int. Cl.: F16N 25/02, F16N 27/00

(54) **Schmierstoffverteiler**
Lubricant distributor
Distributeur de lubrifiant

(30) Priorität: 14.02.2009 DE 202009002574 U; 03.03.2009 DE 202009002951 U; 25.03.2009 DE 202009004167 U
(43) Veröffentlichungstag der Anmeldung: 18.08.2010
(73) Patentinhaber: Lincoln GmbH, 69190 Walldorf (DE)
(72) Erfinder: Paluncic, Zdravko, Dr., 67067 Ludwigshafen (DE); Trinkel, Ralf, 67229 Gerolsheim (DE)
(74) Vertreter: KEIL & SCHAAFHAUSEN Patentanwälte

(56) Entgegenhaltungen:
- DE-A1- 2 064 324
- DE-A1- 3 743 998
- DE-U- 7 239 368
- DE-U1- 9 115 265
- US-A- 3 715 013
- US-A- 4 397 376

## Beschreibung

Die Erfindung bezieht sich auf ein Schmierstoffverteiler mit einem Progressivverteiler, mit welchem beispielsweise die Schmierstoff-Auslassmenge eines Einleitungsverteilers auf z. B. bis zu 20 Reibstellen aufgeteilt und gleichzeitig überwacht werden kann.

Progressiwerteiler sind an sich bekannt. Ein Progressiwerteiler besteht aus mehreren Verteilersegmenten, von welchen jeder einen mit Ringnuten versehenen Kolben aufweist, welcher von dem Schmierstoff, in der Regel Schmierfett oder Schmieröl, abwechselnd in zwei Endstellungen gedrückt wird. Mit Hilfe ihrer Ringnuten werden die Kolben in bestimmter Reihenfolge so gesteuert, dass der nächste Kolben erst dann verschoben werden kann, wenn die Kolbenbewegung des vorangegangenen Kolbens nahezu abgeschlossen ist. Alle Kolbenbohrungen sind durch eine Mittelbohrung direkt mit dem Auslass verbunden. Die Progressivverteiler können in jeder beliebigen Position anhalten und wieder anlaufen.

Bei derartigen Progressivverteilem, wie sie beispielsweise in Zentralschmieranlagen eingesetzt werden, besteht das Bedürfnls nach einer dauerhaft zuverlässigen und genauen Dosierung der Schmierstoffmenge.

Aus der Druckschrift DE 2 064 324 A ist eine Zentralschmieranlage bekannt, bei der über Schmierstoffzuteiler und Entnahmeleitungen Schmierfett zu einem als Progressiwerteiler ausgeführten Schmierstoffverieiler gefördert wird. Von dort gelangt das Schmierfett zu den Verbraucherstellen.

Dieser Zielsetzung dient die Erfindung durch die neuartige Kombination eines an sich bekannten Progressiwerteilers mit einem Einleitungszumessventil, indem ein Auslass des Einleitungszumessventils mit dem Einlass des Progressivverteilers in Strömungsverbindung steht bzw. bringbar ist. Auf diese Weise können dem Progressiwerteiler aufeinanderfolgend immer dosierte Teilmengen an Schmierstoff zugeführt werden.

Progressivverteiler und Einleltungszumessventil sind erfindungsgemäß so in neuartiger Weise über eine Steuerkolbeneinrichtung in Strömungsverbindung miteinander zu bringen, indem der Auslass des Einleitungszumessventil in eine Steuerkolbeneinrichtung derart führt, dass ein Steuerkolben unter dem in dem Einleitungszumessventil erzeugten Druck gegen die Wirkung einer Rückstellkraft bezüglich des Einlasskanals des Progressiwerteilers aus einer Verschlussstellung in eine Öffnungsstellung überführbar ist.

Das Gehäuse des Einleitungszumessventils (das Ventilgehäuse) kann z.B. einen zylindrischen Hohlraum, in welchem ein Differentialkolben abgedichtet verschiebbar gelagert ist, aufweisen. In dem Differentialkolben kann seinerseits ein Ventilkolben zwischen einer einen Strömungsdurchgang durch den Differentialkolben freigebenden und einer den Strömungsdurchgang durch den Differentialkolben gegen die Wirkung einer Rückstellkraft sperrenden Stellung verschiebbar gelagert sein. Der Differentialkolben kann dabei mit einer kleineren Stirnfläche zusammen mit dem Ventilkolben eine Einlasskammer und mit seiner größeren Stirnfläche eine Auslasskammer begrenzen. Der Auslass des Einleitungszumessventils kann von der Auslasskammer derart in die Steuerkolbeneinrichtung führen, dass ein Steuerkolben unter dem in der Auslasskammer herrschenden Druck gegen die Wirkung einer Rückstellkraft bezüglich des Einlasses des Progressiwerteilers aus einer Verschlussstellung in eine Öffnungsstellung überführbar ist.

Auf diese Weise kann entsprechend der Dimensionierung des Einleitungszumessventils und insbesondere der Bemessung der Auslasskammer und dem Verschiebeweg des Differentialkolbens unter Ausnutzung der Funktionsweise der Steuerkolbeneinrichtung jeweils eine vorgegebene Menge an Schmierstoff an den Progressiwerteiler abgegeben werden.

Zur genauen Dosierung kann ferner in Weiterbildung der Erfindung vorgesehen sein, dass in dem Verschiebeweg des Differentialkolbens ein, vorzugsweise stufenlos, verstellbarer Anschlag vorgesehen ist, mit dessen Hilfe die zu dosierende Schmierstoffmenge einfach vorgegeben werden kann.

Eine Kontrolle der Funktion des erfundenen Schmierstoffverteilers kann insbesondere dadurch erfolgen, dass an dem Differentialkolben ein von außen sichtbarer Kontrollstift für die Anzeige der Stellung des Differentialkolbens vorgesehen ist.

Die Ventilfunktion des Einleitungszumessventils wird in zuverlässiger Weise dadurch verwirklicht, dass der Differentialkolben und der Ventilkolben zusammenarbeitende, vorzugsweise konische, Dichtflächen bilden.

Für die Gewährleistung dauerhafter Funktionsfähigkeit und Zuverlässigkeit ist es im Rahmen des Erfindungsgedankens ferner vorgesehen, dass der Ventilkolben zumindest bereichsweise eine zylindrische Außenfläche für die dichtende Anlage an der entsprechend bereichsweise zylindrischen Innenfläche des Differentialkolbens hat und dass die Außenfläche des Ventilkolbens mit einer, vorzugsweise schraubenlinienförmigen, Nut ausgestattet ist, über welche die Einlasskammer mit der Auslasskammer in Strömungsverbindung bringbar ist.

Die Komponenten Progressivverteiler und/oder Steuerkolbeneinrichtung und/oder Einleitungszumessventil können besonders vorteilhaft der Einfachheit halber in ein und dem selben einstückigen Gehäusekörper ausgebildet sein. Es ist aber auch möglich, die einzelnen Komponenten in je eigenen Gehäusen vorzusehen, welche aneinander geflanscht werden können und damit flexibler einsetzbar sind. Auch nur zwei der jeweils benachbarten Komponenten können in einem einstückigen Gehäusekörper zusammengefasst werden, während die dritte Komponente anflanschbar ist.

Weitere Ziele, Vorteile und Anwendungsmöglichkeiten der Erfindung ergeben sich aus der nachfolgenden Beschreibung von Ausführungsbeispielen anhand der Zeichnung.

Es zeigen schematisch:
- Fig. 1a bis 1 c: in Draufsicht, in Frontansicht und im Schnitt A-A von Fig. 1b einen die Erfindung aufweisenden Schmierstoffverteiler, und

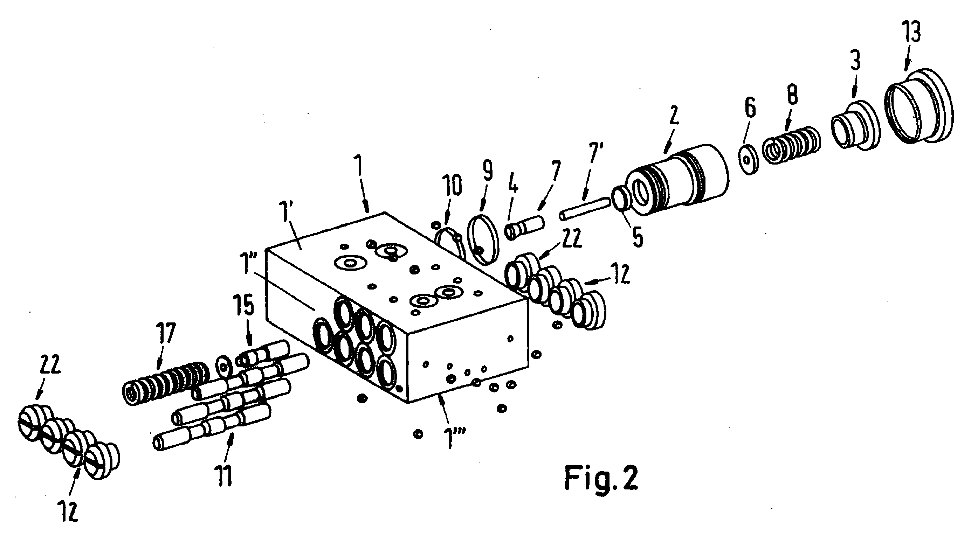

- Fig. 2: in Schrägansicht, auseinandergezogen, den Schmierstoffver- teiler gemäß den Figuren 1a bis 1 c.

Das zeichnerisch dargestellte Ausführungsbeispiel eines erfindungsgemäßen Schmierstoffverteilers enthält in einem in diesem Fall einheitlichen Gehäuse 1 ein Einleitungszumessventil ZV, eine Steuerkolbeneinrichtung SK und einen Progressivverteiler PV in jeweiligen Gehäuseabschnitten (Ventilgehäuse 1', Steuerkolbengehäuse 1" und Progressivvertellergehäuse 1"') ausgebildet, wobei die drei Gehäuseabschnitte 1'. 1", 1'" wahlweise auch einzeln gefertigt und miteinander zusammengeflanscht sein können, um In Strömungsverbindung miteinander zu stehen.

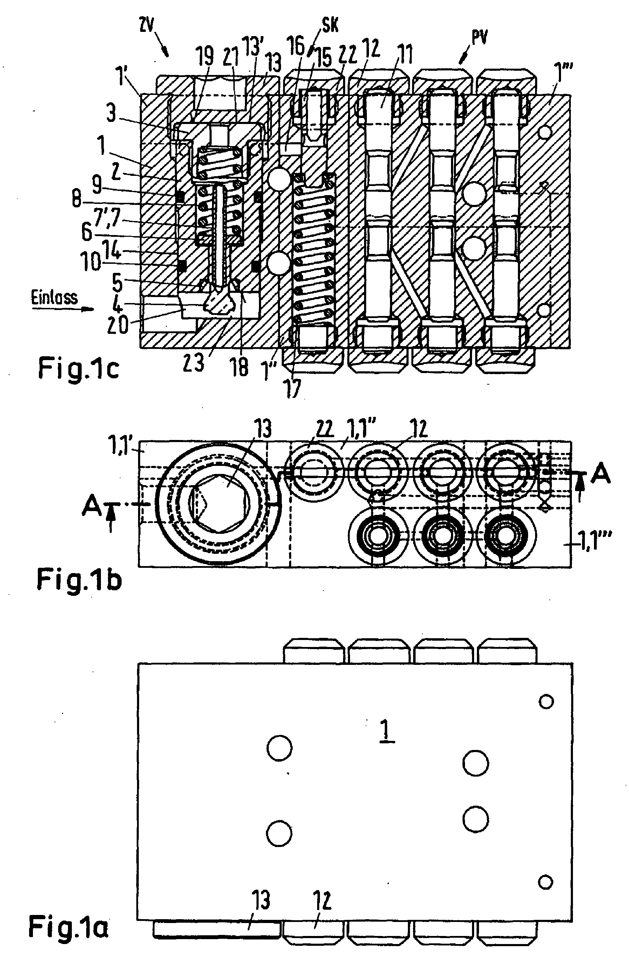

Das Einleitungszumessventil ZV weist in dem Ventilgehäuse 1', welchem bei Betrieb über einen Einlass flüssiger oder viskoser Schmierstoff zugeführt wird, einen zylindrischen Hohlraum 14 auf, in welchem ein Differentialkolben 2 mittels O-Ring-Dichtungen 9, 10 außen abgedichtet verschiebbar gelagert ist. In dem Differentialkolben 2 ist seinerseits ein Ventilkolben 7 zwischen einer einen Strömungsdurchgang durch den Differentialkolben 2 freigebenden (in der Figur 1c dargestellten unteren) Stellung und einer den Strömungsdurchgang durch den Differentialkolben 2 gegen die Wirkung einer mittels Druckfeder 8 und Scheibe 6 aufgebrachten Rückstellkraft sperrenden (in der Zeichnung nicht dargestellten oberen) Stellung verschiebbar gelagert. Der Differentialkolben 2 begrenzt mit seiner kleineren Stirnfläche 18 zusammen mit dem Ventilkörper 4 des Ventilkolbens 7 eine Einlasskammer 20 und mit seiner größeren Stirnfläche 19 eine Auslasskammer 21. In der kleineren Stirnfläche 18 des Differentialkolbens 2 ist mittels einer Dichtung 5 eine konische Dichtfläche ausgebildet, gegen welche sich der Ventilkörper 4 des Ventilkolbens 7 beim Verschieben des Differentialkolbens 2 in der Zeichnung von oben nach unten mit einer entsprechend konischen Dichtfläche dichtend anlegen kann. Der Ventilkolben 7 hat zumindest bereichsweise eine zylindrische Außenfläche für die dichtende Anlage an der entsprechend bereichsweise zylindrischen Innenfläche des Differentialkolbens 2 und die Außenfläche des Ventilkolbens 7 ist mit einer nicht zeichnerisch dargestellten, vorzugsweise schraubenlinienförmigen, Nut ausgestattet, über welche die Einlasskammer 20 mit der Auslasskammer 21 in Strömungsverbindung bringbar ist. Der Ventilkolben 7 weist bei dem dargestellten Ausführungsbeispiel einen Spannstift 7' auf. Der Durchgang des Differentialkolbens 2 ist an seinem in der Zeichnung oberen Ende mit einer Differentialkolbenschraube 3 geschlossen, an welcher sich innen die Druckfeder 8 abstützen kann, welche mit ihrem in der Zeichnung unteren Ende an der Scheibe 6 anliegt. Der Hohlraum 14 ist seinerseits nach oben mit einer Ventilverschlussschraube 13 abgeschlossen, welche einen Anschlag 13' für die Differentialkolbenschraube 3 bilden kann, wenn der Differentialkolben 2 zur Beschickung des Progressivverteilers PV in der Zeichnung nach oben verschoben wird.

Ein Auslass der Auslasskammer 21 mündet über einen Einlasskanal 16 in das Steuerkolbengehäuse 1 ", in dessen Hohlraum ein Steuerkolben 15 von einer Druckfeder 17 in Verschlussrichtung bezüglich des Einlasses des Progressivverteilers PV gedrückt wird. Die Gehäusebohrung des Steuerkolbens 1" ist in der Zeichnung oben von einer Steuerkolbenverschlussschraube 22 abgeschlossen.

Der sich an die Steuerkolbeneinrichtung SK in Strömungsrichtung anschließende Progressivverteiler PV weist in üblicher Weise eine vorgegebene Anzahl, im dargestellten Falle drei, Ringnutenkolben 11 auf, mit welchen sechs Reibstellen versorgt werden können. Die Bohrungen für die Aufnahme der Ringnutenkolben 11 in dem Progressivverteilergehäuse 1"' sind in der Zeichnung oben jeweils mit Progressivverteilerverschlussschrauben 12 abgeschlossen.

Das Funktionsprinzip ist folgendes: Im Betrieb gelangt Schmierstoff , z.B. von einer Schmierstoffpumpe, in den seitlichen Einlass des Ventilgehäuses 1' des Gehäusekörpers 1. In Grundstellung ist das von Ventilkörper 4 und Dichtung 5 gebildete Ventil in dem Differentialkolben 2 offen. Der Schmierstoff kann frei an der Ventilverengung vorbei durch den Differentialkolben 2 strömen. Der Steuerkolben 15 der Steuerkolbeneinrichtung SK wird zu diesem Zeitpunkt noch durch die Rückstellkraft der Druckfeder 17 in geschlossener Stellung gehalten.

Wird so viel Schmierstoff in den Schmierstoffverteiler gefördert, dass sich in ihm Druck aufbaut, bewegt sich der Differentialkolben 2 aufgrund der Größendifferenz seiner Stirnflächen 18 und 19 in der Zeichnung nach unten, bis das Ventil 4, 5 aufgrund des Anlegens an den Einlasskammerboden 23 schließt. In dieser bis zum Schließen des Ventil 4,5 dauernden Vordosierungsphase wird die Auslasskammer 21 über den Differentialkolben 2 mit Schmierstoff gefüllt.

Ist das Ventil 4, 5 geschlossen, steigt bei weiterer Schmierstoffzufuhr der Druck in der Einlasskammer 20 weiter an, bis der sich über der größeren Stirnfläche 19 des Differentialkolbens 2 gewandelte Druck in der Auslasskammer 21 hoch genug ist, um den Steuerkolben 15 gegen die Rückstellkraft der Druckfeder 17 zu verschieben und somit den Durchgang zu dem Progressivverteiler PV zu öffnen. Sobald der Steuerkolben 15 den Kanal zu dem Progressivverteiler PV geöffnet hat, kann der Differentialkolben 2 mit geschlossenem Ventil 4, 5 durch den anstehenden Schmierstoffdruck nach oben geschoben werden. Hierbei wird eine vorgegebene Menge an Schmierstoff auf der oberen Seite des Differentialkolbens 2 in den nachgeschalteten Progressivverteiler PV gedrückt, welcher diesen gleichmäßig auf die in diesem Fall vorgesehenen sechs Auslässe verteilt.

Der Schmierzyklus ist beendet, sobald der Differentialkolben 2 seinen Anschlag 13' an der Ventilverschlussschraube 13 erreicht hat. Nun erfolgt eine Druckentlastung der Hauptleitung zu der Einlasskammer 20. Bei dieser Druckentlastung wird das Ventil 4, 5 durch die Rückstellkraft der Druckfeder 8 in dem Differentialkolben 2 geöffnet, wodurch sich dieser zum Druckausgleich in der Zeichnung etwas nach unten bewegt. Der Steuerkolben 15 verschließt den Kanal zu dem Progressivverteiler PV. Die Grundstellung ist wieder erreicht.

Der von der Verschlussschraube 13 gebildete Anschlag 13' für den Differentialkolben 2 ist z. B. durch eine andere Verschlusskante in Verbindung mit einem Kontrollstift austauschbar, welcher eine Hubbegrenzung darstellt, um die jeweilige Dosiermenge festzulegen.

In der Zeichnung nicht dargestellt ist ein Kontrollstift, welcher an den Differentialkolben 2 abgebracht ist und nach außen ragt, um eine optische Kontrollmöglichkeit für die Funktion des Schmierstoffverteilers von außen zu gewährleisten.

### Bezugszeichenliste

- 1: Gehäusekörper
- 1': Ventilgehäuse
- 1": Steuerkolbengehäuse
- 1"': Progressivverteilergehäuse
- 2: Differentialkolben
- 3: Differentialkolbenschraube
- 4: Ventilkörper
- 5: Dichtung
- 6: Scheibe
- 7: Ventilkolben
- 7': Spannstift
- 8: Druckfeder
- 9: O-Ring-Dichtung
- 10: O-Ring-Dichtung
- 11: Ringnutenkolben
- 12: Progressivverteilerverschlussschrauben
- 13: Ventilverschlussschraube
- 13': Anschlag
- 14: Hohlraum
- 15: Steuerkolben
- 16: Einlasskanal
- 17: Druckfeder
- 18: kleinere Stirnfläche
- 19: größere Stirnfläche
- 20: Einlasskammer
- 21: Auslasskammer
- 22: Steuerkolbenverschlussschraube
- 23: Einlasskammerboden

- PV: Progressivverteiler
- SK: Steuerkolbeneinrichtung
- ZV: Einleitungszumessventil

## Patentansprüche

1. Schmierstoffverteiler, mit einem Progressivverteiler (PV) und einem Einleitungszumessventil (ZV), wobei ein Auslass des Einleitungszumessventils (ZV) mit dem Einlass des Progressivverteilers (PV) in Strömungsverbindung steht bzw. zu bringen ist, **dadurch gekennzeichnet, dass** der Progressivverteiler (PV) und das Einleitungszumessventil (ZV) über eine Steuerkolbeneinrichtung (SK) in Strömungsverbindung stehen bzw. zu bringen sind, wobei der Auslass des Einleitungszumessventil (ZV) in die Steuerkolbeneinrichtung (SK) derart führt, dass ein Steuerkolben (15) unter dem in dem Einleitungszumessventil (ZV) herrschenden Druck gegen die Wirkung einer Rückstellkraft bezüglich des Einlasskanals des Progressivverteilers (PV) aus einer Verschlussstellung in eine Öffnungsstellung überführbar ist.

2. Schmierstoffverteiler nach Anspruch 1, **dadurch gekennzeichnet, dass** das Einleitungszumessventil (ZV) ein Ventilgehäuse (1') mit einem zylindrischen Hohlraum (14) aufweist, in welchem ein Differentialkolben (2) abgedichtet verschiebbar gelagert und in welchem seinerseits ein Ventilkolben (7) zwischen einer einen Strömungsdurchgang durch den Differentialkolben (2) freigebenden und einer den Strömungsdurchgang durch den Differentialkolben (2) gegen die Wirkung einer Rückstellkraft sperrenden Stellung verschiebbar gelagert ist, wobei der Differentialkolben (2) mit seiner kleineren Stirnfläche (18) zusammen mit dem Ventilkolben (7) eine Einlasskammer (20) und mit seiner größeren Stirnfläche (19) eine Auslasskammer (21) begrenzt.

3. Schmierstoffverteiler nach Anspruch 2, **dadurch gekennzeichnet, dass** in dem Verschiebeweg des Differentialkolbens (2) ein, vorzugsweise stufenlos, verstellbarer Anschlag (13') vorgesehen ist.

4. Schmierstoffverteiler nach einem der Ansprüche 2 oder 3, **dadurch gekennzeichnet dass** an dem Differentialkolben (2) ein sichtbarer Kontrollstift für die Anzeige seiner Stellung des Differentialkolbens (2) vorgesehen ist.

5. Schmierstoffverteiler nach einem der Ansprüche 2 bis 4, **dadurch gekennzeichnet, dass** der Differentialkolben (2) und der Ventilkolben (7) zusammenarbeitende, vorzugsweise konische, Dichtflächen bilden.

6. Schmierstoffverteiler nach einem der Ansprüche 2 bis 5, **dadurch gekennzeichnet, dass** der Ventilkolben (7) zumindest bereichsweise eine zylindrische Außenfläche für die dichtende Anlage an der entsprechend bereichsweise zylindrischen Innenfläche des Differentialkolbens (2) hat und dass die Außenfläche des Ventilkolbens (7) mit einer, vorzugsweise schraubenlinienförmigen, Nut ausgestattet ist, über welche die Einlasskammer (20) mit der Auslasskammer (21) in Strömungsverbindung bringbar ist.

7. Schmierstoffverteiler nach einem der vorhergehenden Ansprüche, **dadurch gekennzeichnet, dass** der Progressiwerteiler (PV) und/oder die Steuerkolbeneinrichtung (SK) und/oder das Einleitungszumessventll (ZV) in ein und demselben Gehäusekörper (1) ausgebildet sind.

## Claims

1. A lubricant distributor, with a progressive distributor (PV) and a single-line metering valve (ZV), in which case an outlet of the single-line metering valve (ZV) is or can be brought into flow communication with the inlet of the progressive distributor (PV), **characterized in that** the progressive distributor (PV) and the single-line metering valve (ZV) are or can be brought into flow communication with one another via a control piston device (SK), the outlet of the single-line metering valve (ZV) leading into the control piston device (SK) in such a way that, under the pressure prevailing in the single-line metering valve (ZV), a control piston (15) can be moved against the action of a restoring force from a closed position in respect of the inlet channel of the progressive distributor (PV) into an open position.

2. A lubricant distributor according to Claim 1, **characterized in that** the single-line metering valve (ZV) has a valve housing (1') with a cylindrical hollow space (14) in which a differential piston (2) is seated so as to be sealed and movable, and in which, in turn, a valve piston (7) is seated so as to be movable between a position opening up a flow passage through the differential piston (2), and a position closing off the flow passage through the differential piston (2) against the action of a restoring force, in which case the smaller end face (18) of the differential piston (2) together with the valve piston (7) delimits an inlet chamber (20) and its larger end face (19) delimits an outlet chamber (21).

3. A lubricant distributor according to Claim 2, **characterized in that** an adjustable stop (13'), preferably a progressively adjustable stop (13'), is provided in the path of travel of the differential piston (2).

4. A lubricant distributor according to one of Claims 2 or 3, **characterized in that** a visible control pin for indicating the position of the differential piston (2) is provided on the differential piston (2).

5. A lubricant distributor according to one of Claims 2 to 4, **characterized in that** the differential piston (2) and the valve piston (7) form cooperating, preferably conical, sealing surfaces.

6. A lubricant distributor according to one of Claims 2 to 5, **characterized in that** at least in some areas the valve piston (7) has a cylindrical outer face for a sealing contact with the corresponding partially cylindrical inner face of the differential piston (2), and **in that** the outer face of the valve piston (7) is provided with a groove, preferably helical in form, via which the inlet chamber (20) can be brought into flow communication with the outlet chamber (21).

7. A lubricant distributor according to one of the preceding claims, **characterized in that** the progressive distributor (PV) and/or the control piston device (SK) and/or the single-line metering valve (ZV) are assembled in one and the same housing body (1).

## Revendications

1. Distributeur de lubrifiant, comprenant un distributeur progressif (PV) et une vanne de dosage d'introduction (ZV), une sortie de la vanne de dosage d'introduction (ZV) étant ou devant être mise en liaison d'écoulement avec l'entrée du distributeur progressif (PV), **caractérisé en ce que** le distributeur progressif (PV) et la vanne de dosage d'introduction (ZV) étant ou devant être mis en liaison d'écoulement par un dispositif de piston de commande (SK), la sortie de la vanne de dosage d'introduction (ZV) allant dans le dispositif de piston de commande (SK) de telle sorte qu'un piston de commande (15) peut être transféré, sous l'effet de la pression régnant dans la vanne de dosage d'introduction (ZV) contre l'effet d'une force de rappel par rapport au canal d'entrée du distributeur progressif (PV) d'une position de fermeture dans une position d'ouverture.

2. Distributeur de lubrifiant selon la revendication 1, **caractérisé en ce que** la vanne de dosage d'introduction (ZV) présente un boîtier de vanne (1') avec une cavité (14) cylindrique, dans laquelle un piston différentiel (2) est monté de façon étanchéifié et dans laquelle pour sa part un piston à soupape (7) est monté de façon à pouvoir coulisser entre une position libérant un passage d'écoulement par le piston différentiel (2) et une position bloquant le passage d'écoulement par le piston différentiel (2) contre l'effet d'une force de rappel, le piston différentiel (2) délimitant une chambre d'entrée (20) avec sa surface frontale (18) plus petite en même temps que le piston à soupape (7) et une chambre de sortie (21) avec sa surface frontale (19) plus grande.

3. Distributeur de lubrifiant selon la revendication 2, **caractérisé en ce qu'**une butée (13') réglable, de préférence de façon progressive, est prévue dans la course de coulissement du piston différentiel (2).

4. Distributeur de lubrifiant selon l'une quelconque des revendications 2 ou 3, **caractérisé en ce qu'**une broche de contrôle visible est prévue sur le piston différentiel (2) pour l'affichage de sa position.

5. Distributeur de lubrifiant selon l'une quelconque des revendications 2 à 4, **caractérisé en ce que** le piston différentiel (2) et la soupape à piston (7) forment des surfaces d'étanchéité accouplées, de préférence coniques.

6. Distributeur de lubrifiant selon l'une quelconque des revendications 2 à 5, **caractérisé en ce que** le piston à soupape (7) a au moins par endroits une surface extérieure cylindrique pour l'appui étanchéifiant sur la surface intérieure cylindrique en conséquence par endroits du piston différentiel (2) et **en ce que** la surface extérieure de la vanne à piston (7) est équipée d'une rainure,, de préférence en forme d'hélice, par laquelle la chambre d'entrée (20) peut être amenée en liaison d'écoulement avec la chambre de sortie (21).

7. Distributeur de lubrifiant selon l'une quelconque des revendications précédentes, **caractérisé en ce que** le distributeur progressif (PV) et/ou le dispositif de piston de commande (SK) et/ou la vanne de dosage d'introduction (ZV) sont conçues dans un seul et même corps de boîtier (1).
